# EUROPÄISCHE PATENTSCHRIFT

(11) **EP 0 517 867 B1**
(45) Veröffentlichungstag und Bekanntmachung des Hinweises auf die Patenterteilung: **16.02.1994**
(21) Anmeldenummer: 92900188.1
(22) Anmeldetag: 06.12.1991
(51) Int. Cl.: B62D 25/08, B62D 29/00

(54) **TRAGSTRUKTUR EINER KAROSSERIE EINES PERSONENKRAFTWAGENS**
BEARING STRUCTURE FOR THE BODYWORK OF A PASSENGER CAR
STRUCTURE PORTEUSE D'UNE CARROSSERIE DE VEHICULE DE TOURISME

(30) Priorität: 20.12.1990 DE 4041036
(43) Veröffentlichungstag der Anmeldung: 16.12.1992
(73) Patentinhaber: AUDI AG, 85002 Ingolstadt (DE)
(72) Erfinder: ENNING, Norbert, D-8071 Denkendorf (DE); KREIS, Gundolf, D-8072 Oberstimm (DE); FELDSCHMID, Alois, D-8070 Ingolstadt (DE); DORNBERG, Christian, D-8070 Ingolstadt (DE); REITER, Karl, D-8071 Lenting (DE); TIMM, Heinrich, D-8070 Ingolstadt (DE)
(74) Vertreter: Engelhardt, Harald
(86) Internationale Anmeldenummer: EP9102335
(87) Internationale Veröffentlichungsnummer: WO9211166

(56) Entgegenhaltungen:
- DE-A- 801 960
- DE-A- 2 713 604
- FR-A- 2 439 124
- GB-A- 201 253

## Beschreibung

Die Erfindung betrifft eine Tragstruktur einer Karosserie eines Personenkraftwagens nach dem Oberbegriff des Anspruchs 1.

Eine bekannte Tragstruktur einer Karosserie eines Personenkraftwagens enthält im Vorderwagen vordere, beidseitig verlaufende Längsträger mit darüber angeordneten Federbeinaufnahmen, die nach unten hin auf die Längsträger abgestützt sind.

Übliche selbsttragende Fahrzeugkarosserien für Personenkraftwagen sind, einschließlich der Tragstruktur, aus Blechteilen hergestellt. Träger mit Hohlprofilen werden dabei jeweils aus wenigstens zwei tiefgezogenen und miteinander verschweißten Blechen hergestellt. Auch die Federbeinaufnahmen sind aus Blechteilen hergestellt, dergestalt, daß sie in die Glockenstruktur tiefgezogener Radhäuser eingebettet sind. Diese Radhäuser bestehen aus offenen Blechschalen, die nach unten am Längsträger abgestützt und mit diesem verbunden sind. Der Kraftfluß wird dabei über die Flächenteile als Schubwände geleitet. Die Federbeinaufnahme ist ein stark belastetes und stark beanspruchtes Karosserieteil und die erforderliche Steifigkeit der Tragstruktur in diesem Bereich, insbesondere für den Crashfall, ist bei üblichen Konstruktionen nur durch aufwendige Verstärkungsmaßnahmen erreichbar.

Die zum Aufbau solcher selbsttragenden Karosserien verwendeten Stahlbleche werden im Tiefziehverfahren verformt. Die Preßwerkzeuge zum Verformen der Bleche sind verhältnismäßig teuer, lassen jedoch hohe Stückzahlen zu, so daß für eine Großserienfertigung damit eine kostengünstige Lösung zur Verfügung steht. Aufgrund der hohen Werkzeuginvestitionen gestaltet sich das beschriebene Verfahren für Kleinserien jedoch sehr kostenintensiv.

Es ist daher insbesondere für Kleinserien bekannt (EP 0 146 716 B1), Fahrzeugkarosserien für Personenkraftwagen mit einer Tragstruktur aus Hohlprofilen herzustellen, welche durch Knotenelemente miteinander verbunden sind. Die Hohlprofile sind dabei als Leichtmetall-Strangprofile und die Knotenelemente als Leichtmetall-Gußteile ausgebildet. Neben einer kostengünstigeren Lösung für Kleinserien werden mit einer solchen Konstruktion vorteilhaft auch geringere Karosseriegewichte und Verbesserungen beim Korrosionsschutz erreicht. Hier ist jedoch die Federbeinaufnahme und deren Abstützung auf den zugeordneten Längsträger aus Blechteilen aufgebaut, entsprechend dem konventionellen Aufbau der eingangs beschriebenen, selbsttragenden Fahrzeugkarosserie, so daß die dort erläuterten Besonderheiten auch hier auftreten.

In einer weiter bekannten Fahrzeugkarosserie mit einer Tragstruktur aus Hohlprofilen als Leichtmetall-Strangprofile und aus Knotenelementen als Leichtmetall-Gußteile (Aluminium Journal, Herausgeber: Aluminium-Zentrale e.V., Düsseldorf, erschienen in Zeitschrift ALUMINIUM 64 (1988), Heft 9) ist die Federbeinaufnahme über einen Strangprofilträger nach unten auf den zugeordneten Längsträger abgestützt. Zudem ist ein gerader Strangprofilträger als Federbeinträger zwischen der Federbeinaufnahme und etwa der Mitte bzw. in Höhe der Fensterbrüstung des vorderen Türpfostens (A-Pfosten) angeordnet. Durch die Anbindung der Federbeinaufnahme mit dem Federbeinträger am Türpfosten wird eine stabile Abstützung der Federbeinaufnahme erreicht. Bei einem starken Frontaufprall des Fahrzeugs mit größeren Deformationen im Vorderwagen wird die Federbeinaufnahme in Fahrzeuglängsrichtung nach hinten verschoben. Durch die direkte und gerade Verbindung der Federbeinaufnahme über den Federbeinträger mit der Mitte des A-Pfostens wird auf diese Anbindungsstelle eine erhebliche Kraft ausgewirkt. Dadurch wird der A-Pfosten in Fahrzeuglängsrichtung nach hinten gewölbt, so daß der Türausschnitt verkleinert wird und die Gefahr besteht, daß sich in ungünstiger und unzulässiger Weise die darin befestigte Fahrzeugtür verklemmt. Um dies zu verhindern, wäre entweder der Federbeinträger nur sehr schwach zu dimensionieren, was die gewünschte Steifigkeit während des Normalbetriebs ungünstig beeinflußen würde oder der A-Pfosten unverhältnismäßig stark zu dimensionieren, was sich ungünstig auf die Kosten und das Gewicht auswirken würde.

Bei einer bekannten Tragstruktur (GB-A-1 201 253) werden Abstützträger aus einem Bereich des Motorraums zur Fahrgastzelle hin so ausgeführt, daß sie bei einer Frontalbelastung nachgiebig sind und dann nur geringe Kräfte auf die Fahrgastzelle übertragen werden. Insbesondere sind die Abstützträger so gestaltet, daß sie durch Biegungen und Sicken bei einer Frontbelastung ausknicken.

Zudem ist es bekannt (DE-A-1 801 960), an einem Hohlträger Ausnehmungen und Sicken anzubringen, damit dieser bei einer axialen Belastung durch Falten in seiner Länge verkürzt wird.

Aufgabe der Erfindung ist es, eine gattungsgemäße Tragstruktur einer Karosserie eines Personenkraftwagens so weiterzubilden, daß eine steife Abstützung der Federbeinaufnahme mit einem sicherheitstechnisch günstigen Kraftverlauf bei einem Frontalaufprall des Fahrzeugs mit kostengünstigen und einfachen Mitteln erreicht wird.

Diese Aufgabe wird mit den Merkmalen des Anspruchs 1 gelöst.

Gemäß Anspruch 1 wird vorgeschlagen, daß der Federbeinträger eine Biegung aufweist, das heißt, daß die Trägerverbindung zwischen Federbeinaufnahme und A-Pfosten Mitte nicht geradlinig verläuft, sondern gebogen ist. Zudem weist der Federbeinträger ein Kastenprofil auf mit einer unteren und oberen Wand etwa in einer Horizontalebene und mit etwa senkrecht stehenden Seitenwänden, die entsprechend der Biegung geformt sind, wobei die untere und/oder obere Wand dachförmig angestellt oder in das Hohlprofil eingezogen sind. Der Federbeinträger ist ein Strangprofil und die Federbeinaufnahme ein Gußteil als Knotenelement.

Damit wird erreicht, daß der Federbeinträger stabil mit relativ großen Profilquerschnitten und Wandstärken dimensioniert werden kann, so daß für den normalen Betriebsfall die angestrebte, hohe Steifigkeit der Tragstruktur in diesem Bereich erreicht wird. Bei einem Frontalaufprall ist dagegen die Krafteinleitung auf den A-Pfosten Mitte über die Biegung geführt, wodurch bei einer stärkeren Belastung eine fortgesetzte Biegung mit einer Verringerung des Biegeradius vorgegeben ist und der Federbeinträger bei einer erheblichen Deformation des Vorderwagens ausknickt. Die aufzuwendende Kraft zum Ausknicken des Federbeinträgers hängt unter anderem wesentlich von der Größe der vorgegebenen Biegung ab, so daß darüber die Möglichkeit einer Dimensionierung gegeben ist.

Das vorgeschlagene Kastenprofil ist in Strangpreßtechnik einfach und kostengünstig mit der erforderlichen Stabilität herstellbar.

Mit den Maßnahmen, die untere und/oder obere Wand dachförmig anzustellen oder in das Hohlprofil des Federbeinträgers einzuziehen, wird das Ausknicken des Federbeinträgers bei einem Frontalaufprall weiter begünstigt, für den normalen Betriebsfall aber ein stabiles Trägerprofil geschaffen. Im Falle eines starken Aufpralls beim Ausknicken des Federbeinträgers klappt dann bei einem relativ geringen Kraftaufwand das Hohlprofil in sich zusammen, wobei die Dachkanten als Klappkanten wie Scharniere wirken. Solche längs erlaufenden Klappkanten sind einfach bei Strangprofilen realisierbar.

Durch dieses vorprogrammierte Ausknicken des Federbeinträgers wird im Falle eines Frontalaufpralls wesentlich weniger Kraft auf den A-Pfosten übertragen, so daß sich dieser auch bei üblicher Dimensionierung nicht stark verformt, so daß die daran befestigte Fahrzeugtür im Türausschnitt nicht verklemmt.

Die Biegung wird nach Anspruch 2 vorteilhaft so gewählt, daß sie in einer Draufsicht von oben gesehen etwa zur Fahrzeugmitte bzw. zur Mitte der Fahrgastzelle hin gerichtet ist. In einer solchen Anordnung steht üblicherweise Platz für den Federbeinträger und das Ausknicken im Falle eines Frontalaufpralls zur Verfügung. Ein günstiger Kraftverlauf wird bei dieser Anordnung der Biegung auch dadurch erreicht, daß der Pfosten A an der Längsaußenseite des Fahrzeugs liegt, während die Federbeinaufnahme weiter vorne und mehr zur Fahrzeuglängsmitte hin angeordnet ist. Durch die Biegung des Federbeinträgers nach Anspruch 2 ergibt sich somit für den Fall eines Frontaufpralls eine winkelhebelartige Anordnung, die für einen Ausknickvorgang günstig ist. Dies gilt auch dann, wenn die Biegung aufgrund baulicher Gegebenheiten nach außen hin gerichtet sein sollte.

Eine weitere, alternative oder zusätzliche Maßnahme für eine verbesserte Einleitung des Ausknickvorgangs für den Federbeinträger bei einem Frontaufprall wird mit Anspruch 3 vorgeschlagen. Dabei sollen an den Federbeinträgerwänden an der Biegungsinnenseite und/oder Biegungsaußenseite Ausnehmungen angebracht sein, die bevorzugt nach Anspruch 4 als etwa in der Mitte der Biegung gegenüberliegende Langlöcher ausgeführt sind.

Bei einem Strangprofil ist auch die Reduzierung der Materialstärke gegenüber den übrigen Wandbereichen an den Hohlprofilkanten einfach realisierbar, wie dies mit Anspruch 5 beansprucht ist. Über diese reduzierten Materialstarken an den Hohlprofilkanten wird ebenfalls das Zusammenklappen des Hohlprofils im Bereich der Biegung bei relativ geringem Kraftaufwand begünstigt. Damit steht auch hierüber eine weitere, alternative oder zusätzliche Maßnahme zur Verfügung, das Ausknicken des Federbeinträgers bei einem Frontaufprall zu unterstützen.

Anhand einer Zeichnung werden Ausführungsbeispiele der Erfindung mit weiteren Merkmalen, Einzelheiten und Vorteilen näher erläutert.

Es zeigen
Fig. 1 eine Seitenansicht einer Tragstruktur einer Karosserie eines Personenkraftwagens im Bereich einer Federbeinaufnahme,
Fig. 2 eine Draufsicht auf den Bereich der Federbeinaufnahme nach Fig. 1,
Fig. 3 einen Querschnitt durch das Hohlprofil einer ersten Ausführungsform eines Federbeinträgers,
Fig. 4 einen Querschnitt durch das Hohlprofil einer zweiten Ausführungsform eines Federbeinträgers und
Fig. 5 eine vergrößerte Darstellung des Bereichs einer Hohlprofilkante mit gegenüber der übrigen Wandstärke reduzierter Materialstärke.

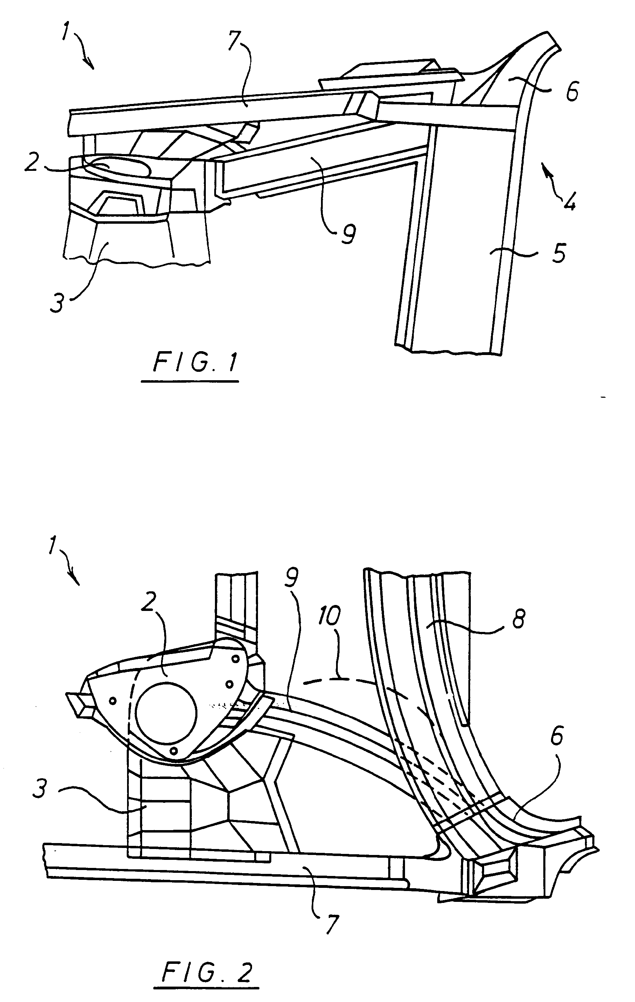

In den Fig. 1 und 2 ist in einer Seitenansicht bzw. Draufsicht eine Tragstruktur 1 einer Karosserie eines Personenkraftwagens im Bereich einer Federbeinaufnahme 2 dargestellt. Die Federbeinaufnahme 2 ist nach unten über eine Trägeranordnung 3 auf einen vorderen (nicht dargestellten) Längsträger abgestützt. Der vordere Türpfosten als A-Pfosten 4 ist in der Mitte geteilt und besteht im unteren Teil aus einem Strangprofilteil 5, das mit einem Gußteil als Knotenelement A-Pfosten Mitte 6 verbunden ist.

An dieses Knotenelement 6 ist ein nach vorne weisendes Strangprofil als Kotflügelbank 7, ein (nicht dargestelltes) Strangprofil als oberer Teil des A-Pfostens und ein quer verlaufendes Strangprofil als Querträger 8 und unterer Fensterholm des Frontfensters angeschlossen.

Die Federbeinaufnahme 2 und das Knotenelement 6 sind zudem über einen als Strangprofil ausgeführten Federbeinträger 9 verbunden. Dieser Federbeinträger 9 verläuft nicht geradlinig, sondern weist eine in der Draufsicht nach Fig. 2 gesehen zur Fahrzeugmitte hin gerichtete Biegung auf.

Bei einem Frontaufprall mit großer Deformation des Vorderwagens wird die Federbeinaufnahme 2 etwa in Längsrichtung nach hinten, das heißt in Fig. 2, nach rechts bewegt. Die Biegung des Federbeinträgers 9 in Verbindung mit den weiter beschriebenen Maßnahmen begünstigt dessen Ausknicken entsprechend der strichlierten Linie 10 bei einer starken Belastung, so daß keine allzu großen Kräfte auf das Knotenelement 6, die eine Türverspannung bewirken können, ausgeübt werden.

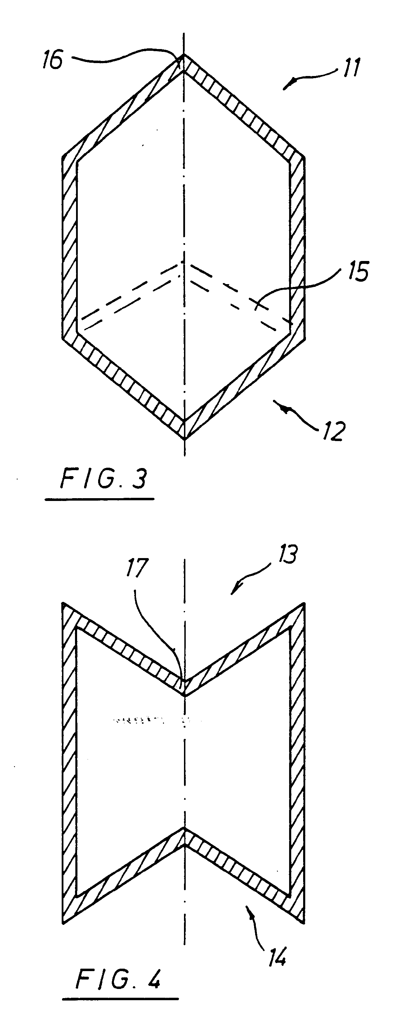

In Fig. 3 ist ein Querschnitt durch das Hohlprofil einer ersten Ausführungsform eines Federbeinträgers 9 dargestellt. Die obere und untere Profilwand 11, 12 sind dabei dachförmig angestellt.

In einer zweiten Ausführungsform nach Fig. 4 sind die obere Profilwand 13 und die untere Profilwand 14 dagegen in das Hohlprofil entsprechend rinnenförmig eingezogen.

Es ist auch eine Kombination dieser beiden Ausführungen möglich, wobei eine Profilwand dachförmig ausgestellt ist und die andere entsprechend eingezogen ist, wie dies mit Bezugszeichen 15 in Fig. 3 angedeutet ist.

Die Ausführungen nach Fig. 3 und Fig. 4 haben jeweils die Funktion, daß bei einem Ausknicken des Federbeinträgers 9 das Hohlprofil um die Kanten 16 bzw. 17 in sich zusammenklappt.

Damit setzt die Hohlprofilstruktur dem Ausknickvorgang nur eine verminderte Kraft entgegen, so daß bei einem Frontaufprall der Federbeinträger schon bei relativ geringer Krafteinwirkung ausknickt und damit auf das Knotenelement 6 nur eine geringe Kraft einwirkt. Während des normalen Betriebsfalls ist eine solche Hohlprofilstruktur jedoch ausreichend stabil, um die für die Abstützung der Federbeinaufnahme erforderliche Steifigkeit zu erhalten.

An den Seitenwänden des Hohlprofils können zusätzlich gegenüberliegende Ausnehmungen in der Form von Langlöchern enthalten sein. Auch solche Ausnehmungen unterstützen den Ausknickvorgang. Die obere und untere Profilwand sind dagegen ohne Ausnehmungen als stabiler Obergurt und Untergurt für eine gute Tragfunktion ausgebildet.

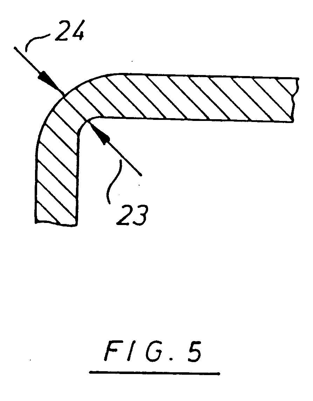

In einer Ausführungsform nach Fig. 5 ist ein Eckbereich eines Strängprofils bzw. eine Hohlprofilkante vergrößert dargestellt. Daraus ist zu erkennen, daß der Innenradius 23 verhältnismäßig klein gegenüber dem Außenradius 24 ausgeführt ist, so daß sich dadurch eine verringerte Materialstärke an der Kante gegenüber der übrigen Wandstärke ergibt. Auch diese Verringerung trägt dazu bei, daß die Hohlprofilstruktur beim Ausknicken des Federbeinträgers 9 mit relativ geringem Kraftaufwand in sich zusammendrückbar ist und damit dem Ausknickvorgang nur einen relativ geringen Widerstand entgegenbringt. Eine solche Materialverdünnung an den Profilkanten ist als zusätzliche, unterstützende Maßnahme an den Kanten 16 und 17 der Ausführungen nach Fig. 3 und Fig. 4 möglich.

## Patentansprüche

1. Tragstruktur einer Karosserie eines Personenkraftwagens
mit vorderen, beidseitig verlaufenden Längsträgern,
mit vorderen Federbeinaufnahmen, die oberhalb der Längsträger angeordnet sind und die nach unten auf die Längsträger abgestützt sind,
mit einem vorderen Türpfosten (A-Pfosten) und mit einem Hohlprofilträger als Federbeinträger zwischen der Federbeinaufnahme und etwa der Mitte bzw. in Höhe der Fensterbrüstung des A-Pfostens,
dadurch gekennzeichnet,
daß der Federbeinträger (9) eine Biegung aufweist, das heißt, die Trägerverbindung zwischen Federbeinaufnahme (2) und A-Pfosten Mitte (Knotenelement 6) nicht geradlinig ist, so daß der Federbeinträger (9) bei einem Frontalaufprall des Fahrzeugs durch Verkleinerung des Biegeradius ausknickt,
daß der Federbeinträger (9) ein Kastenprofil aufweist mit einer unteren und oberen Wand (11, 12; 13, 14) in etwa einer Horizontalebene und etwa senkrechten Seitenwänden, die entsprechend der Biegung geformt sind,
daß die untere (12; 14) und/oder obere Wand (11; 13) dachförmig angestellt oder in das Hohlprofil des Federbeinträgers (9) eingezogen sind, so daß sich jeweils eine Klappkante (16; 17) ergibt, um die beim Ausknicken des Federbeinträgers (9) das Hohlprofil in sich zusammendrückbar ist,
daß der Federbeinträger (9) als Strangprofil, insbesondere als Aluminium-Strangprofil, hergestellt ist und
daß die Federbeinaufnahme (2) sowie der Anbindungspunkt A-Pfosten Mitte (Knotenelemente 6) Gußteile, insbesondere Aluminium-Gußteile, als Karosserie-Knotenelemente einer Leichtmetall-Karosserie sind.

2. Tragstruktur nach Anspruch 1, dadurch gekennzeichnet, daß die Biegung des Federbeinträgers (9) in einer Draufsicht von oben gesehen zur Fahrzeugmitte hin gerichtet ist.

3. Tragstruktur nach Anspruch 1 oder 2, dadurch gekennzeichnet, daß an den Federbeinträgerwänden der Biegungsinnenseite und/oder Biegungsaußenseite Ausnehmungen (21, 22) angebracht sind.

4. Tragstruktur nach Anspruch 3, dadurch gekennzeichnet, daß die Ausnehmungen (21, 22) als Langlöcher mit einer Erstreckung entlang des Trägerverlaufs etwa in der Mitte der Biegung gegenüberliegend angebracht sind.

5. Tragstruktur nach einem der Ansprüche 1 bis 4, dadurch gekennzeichnet, daß an wenigstens einer Hohlprofilkante des Federbeinträgers die Materialstärke gegenüber den übrigen Wandstärken geringer ist (Radien 23, 24).

## Claims

1. Supporting structure of a body of a passenger car,
with front side members extending on both sides,
with front spring-strut receptacles which are arranged above the side members and which are supported at the bottom on the side members,
with a front door post (A-post) and
with a hollow-profile bearer as a spring-strut bearer between the spring-strut receptacle and approximately the middle or the height of the window parapet of the A-post, characterized
in that the spring-strut bearer (9) has a bend, that is to say the bearer connection between the spring-strut receptacle (2) and the middle (junction element 6) of the A-post is not straight, so that, in the event of a head-on collision of the vehicle, the spring-strut bearer (9) buckles as a result of the reduction of the bending radius,
in that the spring-strut bearer (9) has a box profile with a lower and upper wall (11, 12; 13, 14) approxi- mately in a horizontal plane and with approximately vertical side walls which are shaped according to the bend,
in that the lower (12; 14) and/or upper (11; 13) wall are made roof-shaped or are drawn into the hollow profile of the spring-strut bearer (9), so as to produce respectively a folding edge (16; 17), about which the hollow profile can be compressed on itself during the buckling of the spring-strut bearer (9),
in that the spring-strut bearer (9) is produced as an extruded profile, especially as an aluminium extruded profile, and
in that the spring-strut receptacle (2) and the connection point in the middle of the A-post (junction element 6) are castings, especially aluminium castings, as body junction elements of a light-metal body.

2. Supporting structure according to Claim 1, characterized in that, as seen from above in a top view, the bend of the spring-strut bearer (9) is directed towards the middle of the vehicle.

3. Supporting structure according to Claim 1 or 2, characterized in that recesses (21, 22) are formed on the spring-strut bearer walls on the inside of the bend and/or outside of the bend.

4. Supporting structure according to Claim 3, characterized in that the recesses (21, 22) are formed opposite one another, approximately in the middle of the bend, as long holes having an extension along the run of the bearer.

5. Supporting structure according to one of Claims 1 to 4, characterized in that the material thickness is smaller in comparison with the remaining wall thicknesses at at least one hollow-profile edge of the spring-strut bearer (radii 23, 24).

## Revendications

1. Structure portante d'une carrosserie pour voiture légère comprenant :
des longerons avant disposés de chaque côté,
des logements avant pour jambe de force à ressort, disposés au-dessus des longerons et s'appuyant vers le bas sur ces derniers ;
un montant de porte avant (montant A) ; et
une poutre en profilé creux servant de jambe de force à ressort et montée entre le logement pour jambe de force et approximativement le milieu du montant A, soit à la hauteur du rebord de la fenêtre,
caractérisée en ce que :
la jambe de force à ressort (9) présente une courbure, c'est-à-dire que la poutre de liaison entre le logement (2) pour jambe de force et le milieu du montant A (élément nodal 6) n'est pas droite, de telle sorte que la jambe de force (9) s'infléchisse par compression axiale, par réduction de son rayon de courbure, lors d'une collision frontale du véhicule ;
la jambe de force (9) est un profilé en caisson comprenant une paroi inférieure et une paroi supérieure (11, 12 ; 13, 14) ayant un plan approximativement horizontal et des parois latérales approximativement verticales, qui sont mises en forme selon ladite courbure; et
les parois inférieure (12 ; 14) et/ou supérieure (11 ; 13) sont mises en forme de toit ou rentrées dans le profil creux de la jambe de force (9) de manière à obtenir une face pliable (16 ; 17) grâce à laquelle le profilé creux peut être comprimé lors du flambage de la jambe de force (9) ;
la jambe de force (9) est réalisée sous la forme d'un profilé filé, plus particulièrement d'un profilé filé en aluminium ; et
le logement (2) pour jambe de force, ainsi que le point de liaison au milieu du montant A (éléments nodaux 6) sont des éléments en fonte, plus particulièrement des éléments en fonte d'aluminium, en tant qu'éléments nodaux d'une carrosserie en métal léger.

2. Structure portante selon la revendication 1, caractérisée en ce que la courbure de la jambe de force (9) est orientée, vue de dessus, vers le milieu du véhicule.

3. Structure portante selon la revendication 1 ou 2, caractérisée en ce que des évidements (21, 22) sont prévus dans les parois de la jambe de force du côté intérieur et/ou extérieur de la courbure.

4. Structure portante selon la revendication 3, caractérisée en ce que les évidements (21, 22) sont réalisés sous la forme de trous oblongs s'étendant le long du support approximativement au milieu de la courbure et situés l'un en face de l'autre.

5. Structure portante selon l'une quelconque des revendications 1 à 4, caractérisée en ce que l'épaisseur de matière est réduite à l'endroit d'au moins une arête du profil creux de la jambe de force par rapport à l'épaisseur des parois (rayons 23, 24).
